(19) Europäisches Patentamt
European Patent Office
Office européen des brevets

(11) Publication number: **0 069 594**
**B1**

(12) # EUROPEAN PATENT SPECIFICATION

(45) Date of publication of patent specification: **19.12.84**

(51) Int. Cl.$^3$: **C 01 B 33/28**, C 01 B 33/20, C 01 G 17/00, C 01 G 19/00

(21) Application number: **82303551.4**

(22) Date of filing: **07.07.82**

(54) **Novel crystalline microporous three-dimensionally ordered solid.**

(30) Priority: **07.07.81 GB 8120966**

(43) Date of publication of application:
**12.01.83 Bulletin 83/02**

(45) Publication of the grant of the patent:
**19.12.84 Bulletin 84/51**

(84) Designated Contracting States:
**BE DE FR GB IT NL**

(56) References cited:
**CHEMICAL ABSTRACTS, vol.89, no.18, October 30, 1978, page 399, abstract no.153136m, Columbus, Ohio (US) R. SCHOELLNER et al.: "Effect of the pressing of zeolite on its structure and properties"**
**CHEMICAL ABSTRACTS, vol.96, no.10, March 8, 1982, page 613, abstract no.77761p, Columbus, Ohio (US) M. AUDIER et al.: "Twinning in zeolite Y. The conversion of faujasite into a new zeolite structure"**

(73) Proprietor: **The British Petroleum Company p.l.c.
Britannic House Moor Lane
London EC2Y 9BU (GB)**

(72) Inventor: **Audier, Marc
36 Avenue La Bruyre
F-38100 Grenoble (FR)**
Inventor: **Thomas, John Meurig Dep. of Physical Chemistry
University of Cambridge Lensfield Road
Cambridgeshire, CB2 1EP (GB)**

(74) Representative: **Harry, John et al
c/o The British Petroleum Company plc Patents Division Chertsey Road
Sunbury-on-Thames Middlesex TW16 7LN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 069 594 B1

## Description

The present invention relates to a novel crystalline microporous three-dimensionally ordered solid.

Crystalline microporous three-dimensionally ordered solids are known. A major class of such solids are the zeolites which are found in nature and can also be synthesised. Typical examples of such solids are the mineral, faujasite, and the synthetic zeolites, Types X and Y. Such aluminosilicates are composed of rigid three-dimensional networks of $SiO_4$ and $AlO_4$ tetrahedra crosslinked by the sharing of oxygen atoms such that the ratio of the total aluminium and silicon atoms to oxygen atoms is 1:2. The electrovalence of the tetrahedra containing aluminium is balanced by the inclusion of cations in the pores of the three-dimensional structure. The aluminosilicate framework in the synthetic zeolites X and Y consists of linked, truncated octahedra, otherwise referred to as sodalite cages, which are joined tetrahedrally through 6-membered rings. The linkage between adjoining truncated octahedra is a double 6-membered ring or hexagonal prism, containing 12 (Si,Al)—$O_4$ tetrahedra. There are 16 of these prisms in each unit cell which is cubic with a very large cell dimension of nearly 25Å. The unit cell contains eight large cavities, generally referred to as "supercages', each with a free diameter of about 13Å. Mutually intersecting channels consisting of the 13Å cavities separated by apertures with a free diameter of about 8Å and formed by a somewhat distorted 12-membered ring run through the structure in the [110] direction. The unusually stable and rigid framework structure of the synthetic zeolites X and Y involves the largest void space of any known zeolite and amounts to about 51 volume percent of the crystal when dehydrated. As a consequence of the large void space zeolites X and Y find utility as molecular sieves in adsorption and catalyst applications. In these materials however the apertures and supercages are not linked in a repetitive linear manner with the result that the free flow of adsorbed molecules into and desorbed molecules out of the structure is considerably impeded. A crystalline microporous three-dimensionally ordered solid in which apertures and cages are linearly arranged in a repetitive manner to form an elongated "hypercage" has now been synthesised.

Accordingly the present invention provides a crystalline microporous three-dimensionally ordered solid having the generalised atomic formula:—

$$[M^{p+}(XO_2)p] \,.\, q(YO_2) \,.\, wH_2O \qquad (I)$$

wherein:—

M is at least one cation, X is at least one of aluminium, gallium or indium, Y is at least one of silicon, germanium or tin, p is the valence of the cation, q has a value such that the ratio of q to p lies in the range 1:1 to 150:1 and w is an integer in the range from 0 to 260,

which solid has a unit cell of hexagonal symmetry the principal characteristics of which are:—

a=17.5±0.5Å

c=85.6±0.5Å, and

a unit cell volume=22600±10Å$^3$.

In the formula (I) M may suitably be a monovalent cation such as an alkali metal cation, eg lithium, sodium or potassium, or a divalent cation such as an alkaline earth metal cation, eg calcium or magnesium, or a trivalent cation such as a rare earth metal cation, eg lanthanum. The monovalent cation may also be a hydrogen ion or an ammonium ion. Alternatively the solid may contain a mixture of cations provided that the electroneutrality of the solid is preserved. The cations can be replaced by ion-exchange techniques well-known in the art. The cation or cations may be replaced by cations which render the solid catalytically active, especially for hydrocarbon conversion. Such cations include hydrogen, rare earth and metals of Groups IIA, IIIA, IVA, IB, IIB, IIIB, IVB, VB, VIB, and VIII of the Periodic Table of the Elements as published in the Handbook of Chemistry and Physics, 60th Edition, 1980.

In the formula (I) X is either aluminium, gallium, or indium and Y is either silicon, germanium or tin, preferably silicon or germanium. For the sake of simplicity the description hereinafter will only refer to the case wherein X is aluminium and Y is silicon. This is in no way intended to restrict the invention to these particular elements. Preferably the ratio of q to p in the formula (I) is in the range from 1:1 to 100:1, even more preferably from 1:1 to 60:1, most preferably from 1:1 to 15:1.

The framework of the novel solid is composed of the same building units as are to be found in natural faujasite and synthetic zeolites X and Y (hereinafter referred to as faujasite-type solids), ie sodalite cages linked by double 6-membered rings or hexagonal prisms, but the units are combined in a different manner to form a new structure. This new structure arises because recurrent twinning on the (111) plane involving reflection across a mirror plane intersecting the supercages and passing through the double 6-membered rings between sodalite cages. Such twinning gives rise to tubular "hypercages" as distinct from the near spherical "supercages" found in the faujasite-type structure. The regular faujasite-type may be represented by

. . . ΔΔΔΔΔ . . .

where each Δ denotes a unit repeat along [111]. The novel structure contains the sequence

... ΔΔ|∇|ΔΔ|∇|ΔΔ|∇|ΔΔ ...

etc. which signifies that a twin lamella, ∇, bounded by a twin plane denoted by the vertical line on each side is introduced between each flanking pair of faujasite-type repeat units along [111], thereby generating "hypercages".

The length of each hypercage is ca. 52A and the extent to which the new microporous solid is occupied by connected hypercages depends upon the extent of twinning. The twinning may occur over substantially the entire crystal in the [111] direction or a major proportion of the crystal in the [111] direction or a major proportion of the crystal in the [111] direction. When a different twinning sequence.

... Δ|∇|Δ|∇|Δ|Δ ...

is generated the hypercage extends for the entire length of the recurrent twin in the [lll] direction. Thus if there are *n* twin planes and when this kind of recurrent twinning is extensive (*n* large) the length of the hypercage—now effectively a tunnel—becomes 14.26*n*Å.

The dimensions of the framework apertures, viewed along the (111)-twinned crystal are significantly different from those viewed along the (110) plane in faujasite-type solids. Whilst the radius of the opening of the supercage in faujasite-type solids is 7.4Å, the twinned structure is elliptical with the longitudinal and transverse diameters being about 7.4Å and about 6.9Å respectively.

The novel solid may be synthesised for example by subjecting a faujasite-type solid to deformation at an elevated pressure and at a temperature below its melting point.

The faujasite-type solid may be for example, faujasite itself, zeolite X, zeolite Y or dealuminised forms of these materials. Moreover the faujasite-type solid may be cation-exchanged if so desired. By the dealuminised form is meant a form in which the ratio of the number of atoms of silicon to the number of atoms of aluminium is increased by removal of aluminium atoms. This may suitably be accomplished by treating the solid with for example silicon tetrachloride vapour in the manner described in 'Catalysis by Zeolites', Volume 5 in Studies in Surface Science and Catalysis, published by Elsevier Scientific Publishing Company at page 203 by Hermann K. Beyer and Ita Belenykaja. The elevated pressure may suitably be generated mechanically. Preferably the pressure is hydrostatic pressure. Suitably the pressure may be up to 50 bars or 100 bars or more. The elevated temperature is preferably in the vicinity of 0.7 to 0.8 of the melting point of the faujasite-type solid, though lower temperatures may be employed. The temperature must not be above the melting point otherwise the crystalline structure is destroyed. The lanthanum exchanged zeolite Y may suitably be deformed at a temperature of about 800°C. The time for which the solid is subjected to the deforming pressure may suitably be at least 30 minutes.

The novel solid is useful as an adsorbent and may be used as a catalyst or as a catalyst support in hydrocarbon conversion reactions. The in

The invention will now be illustrated by reference to the following Example. In the Example reference will be made to the use of high-resolution electron microscopy (HREM) in the structural determination. Details of the general experimental method used in the study of solids by high-resolution imaging are described in Endeavour, New Series 2, 127—136 (1978) by J. M. Thomas and D. A. Jefferson, Nature, 281, 51—52 (1979) by D. A. Jefferson, J. M. Thomas, D. J. Smith, R. A. Camps, C. J. D. Catto and J. R. A. Cleaver and Chemica Scripta, 14, 167—179 (1978-79) by J. M. Thomas, D. A. Jefferson, L. G. Mallison, D. J. Smith and E. Siân Crawford. Specific details relating to the extra precautions concerning preevacuation procedures and sample preparation are described in Phil Trans. Roy. Soc. Lond. 1981 by J. M. Thomas, G. R. Millward and L. A. Bursill, Nature, 289, 157—158 (1981) by L. A. Bursill, J. M. Thomas and K. J. Rao and Nature, 286, 111—113 (1980) by L. A. Bursill, E. A. Lodge and J. M. Thomas. Optical transforms were routinely used for further analysis of high-resolution micrographs by the method described in Nature, 289, 157—158 (1981).

Example

1 gram of commercial zeolite Linde Y (sodium form) was treated in a teflon® autoclave with 7 g of lanthanum chloride dissolved in 50 ml of water. The ion-exchange process was at 100°C for the period of 24 hours, after which time the solid was filtered off, washed repeatedly with distilled water, and the procedure repeated. The product, after washing, was dried in a furnace in air at 450°C for 12 hours and transferred into a gold cartridge which was then welded in a dry box filled with dry argon, so that no water could be absorbed by the product. The cartridge was then placed inside a high temperature device in which heat and hydrostatic pressure could be simultaneously applied. The cartridge was heated to 800±1°C and a hydrostatic pressure of 100±1 bar applied for a period of 30 minutes from the moment the final temperature was reached. The pressure was then released, the gold cartridge opened and the solid examined by high resolution electron microscopy (HREM). A pre-evacuated sample was rapidly tilted into the appropriate orientation in the microscope using a JEOL-200CX side-entry goniometer. The objective lens spherical aberration coefficient

was 2.5 mm, and images were recorded for the optimum lens defocus condition. Optical transorms were routinely used for further analysis of the high-resolution micrographs. The images showed evidence of twinning on (111) planes.

The structure was established to be hexagonal. Its principal characteristics are:

a=17.46 Å
c=85.56 Å
Unit cell volume=22604 $Å^3$

In order to better illustrate the novel structure the following Figures are provided:—

Figure 1 is a photograph of a scalar model of the novel structure viewed down the [111] axis. The hypercage is clearly visible in the centre of the photograph.

Figure 2 is a photograph of a scaler model showing a connected cross-hatched cubooctahedra as seen when the novel structure is sighted along very nearly the [112] direction. The apertures in view are elliptical as indicated.

## Claims

1. A crystalline microporous three-dimensionally ordered solid having the generalised atomic formula:—

$$[M^{p+}(XO_2)p] \,.\, q(YO_2) \,.\, wH_2O \qquad (I)$$

wherein:

M is at least one cation,
X is at least one of aluminium, gallium or indium,
Y is at least one of silicon, germanium or tin,
p is the valence of the cation,
q has a value such that the ratio of q to p lies in the range 1:1 to 150:1, and
w is an integer in the range from 0 to 260,

which solid has a unit cell of hexagonal symmetry, the principal characteristics of which are:—

a=17.5±0.5 Angstrom,
c=85.6±0.5 Angstrom, and
a unit cell volume=22600±10 $Angstrom^3$.

2. A solid according to claim 1 wherein M in the formula (I) is an alkali metal cation.

3. A solid according to claim 1 wherein M in the formula (I) is an alkaline earth metal cation.

4. A solid according to claim 1 wherein M in the formula (I) is a rare earth metal cation.

5. A solid according to claim 1 wherein M in the formula (I) is a hydrogen ion.

6. A solid according to claim 1 wherein M in the formula (I) is an ammonium ion.

7. A solid according to claim 1 wherein the cation M is exchanged with either a hydrogen ion, a rare earth metal cation or a cation of a metal of Groups IIA, IIIA, IVA, IB, IIB, IIIB, IVB, VB, VIB, or VII of the Periodic Table.

8. A solid according to any one of the previous claims wherein in the formula (I) X is aluminium and Y is silicon.

9. A solid according to any one of the previous claims wherein in the ratio of q to p in the formula (I) is in the range from 1:1 to 15:1.

10. A process for the production of a crystalline microporous three-dimensionally ordered solid as claimed in claim 1 which process comprises subjecting a faujasite-type solid to deformation at an elevated pressure and at a temperature below its melting point.

11. A process according to claim 10 wherein the faujasite-type solid is either faujasite itself, zeolite X, zeolite Y or a dealuminised form of any one of these materials.

12. A process according to either claim 10 or claim 11 wherein the elevated pressure is generated mechanically.

13. A process according to claim 12 wherein the pressure is hydrostatic pressure.

14. A process according to any one of claims 10 to 13 wherein the elevated pressure is up to 100 bars and is supplied for at least 30 minutes.

15. A process according to any one of claims 10 to 14 wherein the temperature is from 0.7 to 0.8 of the melting point of the faujasite-type solid.

## Patentansprüche

1. Ein kristalliner, mikroporöser, drei-dimensional geordneter Feststoff mit der allgemeinen Atomformel:

$$[M^{p+}(XO_2)p] \,.\, q(YO_2) \,.\, wH_2O \qquad (1)$$

worin
M zumindest ein Kation ist,
X zumindest eins von Aluminium, Gallium oder Indium ist,
Y zumindest eins von Silicium, Germanium oder Zinn ist,
p die Valenz des Kations bedeutet,
q einen solchen Wert besitzt, daß das Verhältnis von q zu p im Bereich von 1:1 bis 150:1 liegt, und
w eine ganze Zahl im Bereich von 0 bis 260 ist,

wobei der Feststoff eine Zelleinheit von hexagonaler Symmetrie aufweist, deren wesentliche Charakteristiken sind:

a=17,5±0,5 Angström,
c=85,6±0,5 Angström, und
das Volumen der Zelleinheit=22600±10 $Angström^3$.

2. Feststoff gemäß Anspruch 1, worin M in der Formel (I) ein Alkalimetall-Kation ist.

3. Feststoff gemäß Anspruch 1, worin M in der Formel (I) ein Erdalkalimetall-Kation ist.

4. Feststoff gemäß Anspruch 1, worin M in der Formel (1) ein Seltenerdmetall-Kation ist.

5. Feststoff gemäß Anspruch 1, worin M in der Formel (I) ein Wasserstoffion ist.

6. Feststoff gemäß Anspruch 1, worin M in der Formel (I) ein Ammoniumion ist.

7. Feststoff gemäß Anspruch 1, worin das Kation M aufgetauscht ist durch entweder ein Wasserstoffion, ein Seltenerdmetal-Kation oder ein Kation eines Metalles der Gruppen IIA, IIIA, IVA, IB, IIB, IIIB, IVB, VB, VIB oder VIII des Periodischen Systems.

8. Feststoff gemäß einem der vorgehenden Ansprüche, worin in der Formel 1 X Aluminium und Y Silicium bedeutet.

9. Feststoff gemäß einem der vorgehenden Ansprüche, worin das Verhältnis von q zu p in der Formel (I) im Bereich von 1:1 bis 15:1 liegt.

10. Verfahren zur Herstellung eines kristallinen, mikroporösen, drei-dimensional geordneten Feststoffes gemäß Anspruch 1, wobei ein Feststoff vom Faujasit-Typ einer Deformation bei einem erhöhtem Druck und einer Temperatur unterhalb seines Schmelzpunktes unterworfen wird.

11. Verfahren gemäß Anspruch 10, worin der Feststoff vom Faujasit-Typ entweder Faujasit selbst, Zeolit X, Zeolit Y oder eine entaluminierte Form eines dieser Materialien ist.

12. Verfahren gemäß Anspruch 10 oder 11, worin der erhöhte Druck mechanisch erzeugt wird.

13. Verfahren gemäß Anspruch 12, worin der Druck ein hydrostatischer Druck ist.

14. Verfahren gemäß einem der Anspruch 10 bis 13, worin der erhöhte Druck bis zu 100 bar beträgt und für mindestens 30 Minuten angewandt wird.

15. Verfahren gemäß einem der Ansprüche 10 bis 14, worin die Temperatur 0,7 bis 0,8 des Schmelzpunktes des Feststoffes von Faujasit-Typ beträgt.

**Revendications**

1. Solide cristallin microporeux tridimensionnel ordonné, ayant la formule atomique généralisée:

$$[M^{p+}(XO_2)p] . q(YO_2) . wH_2O \qquad I)$$

dans laquelle:

M représente au moins un cation,
X représente au moins l'un des éléments aluminium, gallium ou indium,
Y représente l'une au moins des éléments silicium, germanium ou étain,
p est la valence du cation,
q a une valeur telle que le rapport de q à p se situe entre 1:1 et 150:1, et
w est un nombre entier compris entre 0 et 260, ce solide ayant une cellule ou maille unitaire de symétrie hexagonale, dont les principales caractéristiques sont:

a=17,5±0,5 Angstrom,
c=85,6±0,5 Angstrom, et

un volume de cellule ou maille unitaire=22600±10 Angstrom³.

2. Solide selon la revendication 1, dans lequel M représente dans la formule (I) un cation de métal alcalin.

3. Solide selon la revendication 1, dans lequel M représente dans la formule (I) un cation de métal alcalino-terreux.

4. Solide selon la revendication 1, dans lequel M représente dans la formule (I) un cation de métal des terres rares.

5. Solide selon la revendication 1, dans lequel M représente dans la formule (I) un ion hydrogéne.

6. Solide selon la revendication 1, dans lequel M représente dans la formule (I) un ion ammonium.

7. Solide selon la revendication 1, dans lequel le cation M a subi un échange de remplacement par un ion hydrogène, un cation de métal des terres rares ou un cation d'un métal des groupes IIA, IIIA, IVA, IB, IIB, IIIB, IVB, VB, VIB ou VIII du Tableau Périodique.

8. Solide selon l'une quelconque revendications précédentes, dans lequel, dans la formule (I) représente l'aluminium et Y représente le silicium.

9. Solide selon l'une quelconque des revendications précédentes, dans lequel, dans la formule (I), le rapport de q à p se situe entre 1:1 et 15:1.

10. Procédé de production d'un solide cristallin microporeux tridimensionnel ordonné selon la revendication 1, ce procédé comprenant la soumission d'une solide de type faujasite à une déformation sous une pression élevée et à une température inférieure à son point de fusion.

11. Procédé selon la revendication 10, dans lequel le solide de type faujasite est la faujasite elle-même, le zéolite X, la zéolite Y ou une forme désaluminisée de l'une quelconque de ces matières.

12. Procédé selon la revendication 10 ou la revendication 11, dans lequel la pression élevée est engendrée mécaniquement.

13. Procédé selon la revendication 12, dans lequel la pression est une pression hydrostatique.

14. Procédé selon l'une quelconque des revendications 10 à 13, dans lequel la pression élevée va jusqu'à 100 bars et est appliquée pendant au moins 30 minutes.

15. Procédé selon l'une quelconque des revendications 10 à 14, dans lequel la température représente de 0,7 à 0,8 fois le point de fusion du solide de type faujasite.

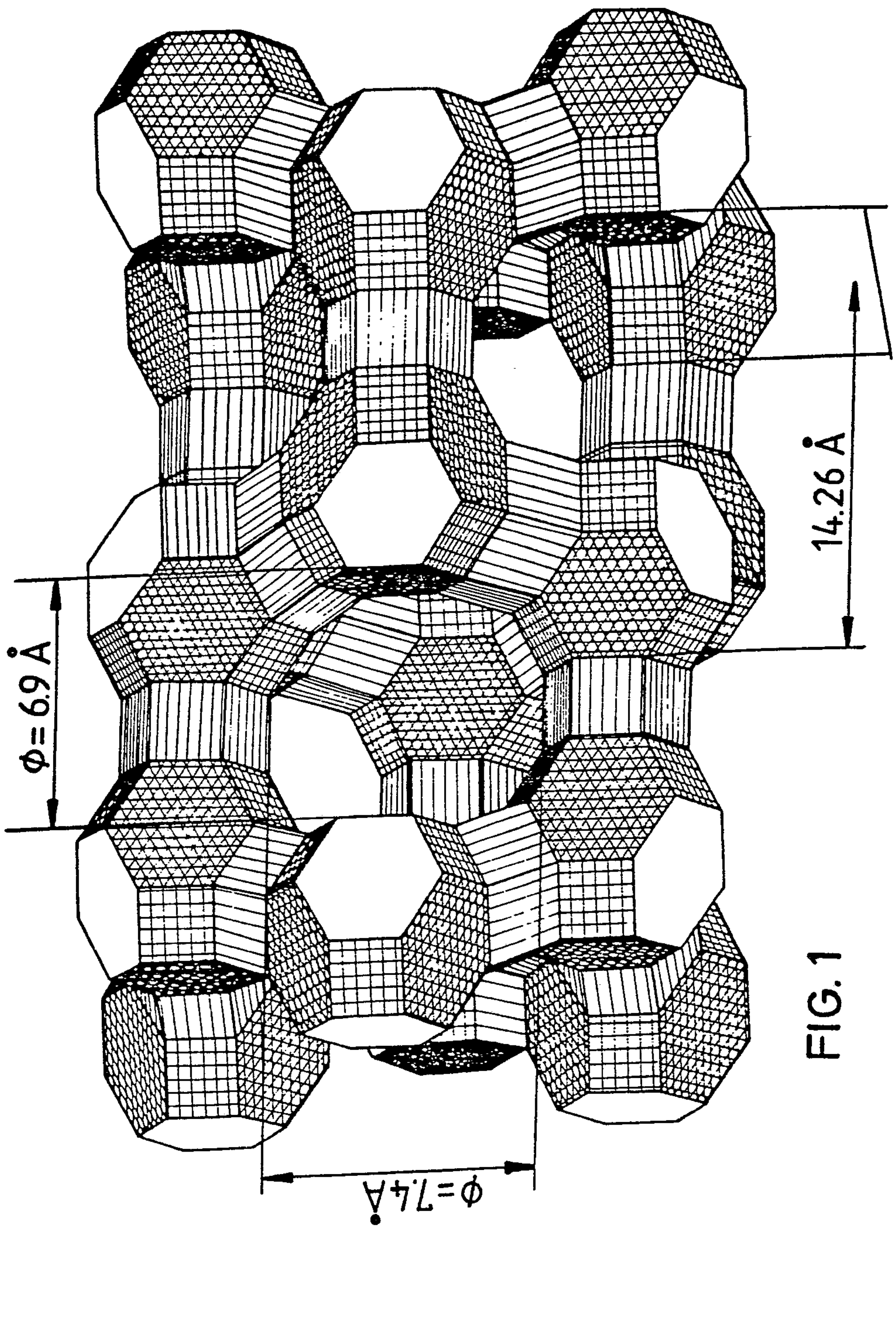


FIG. 1

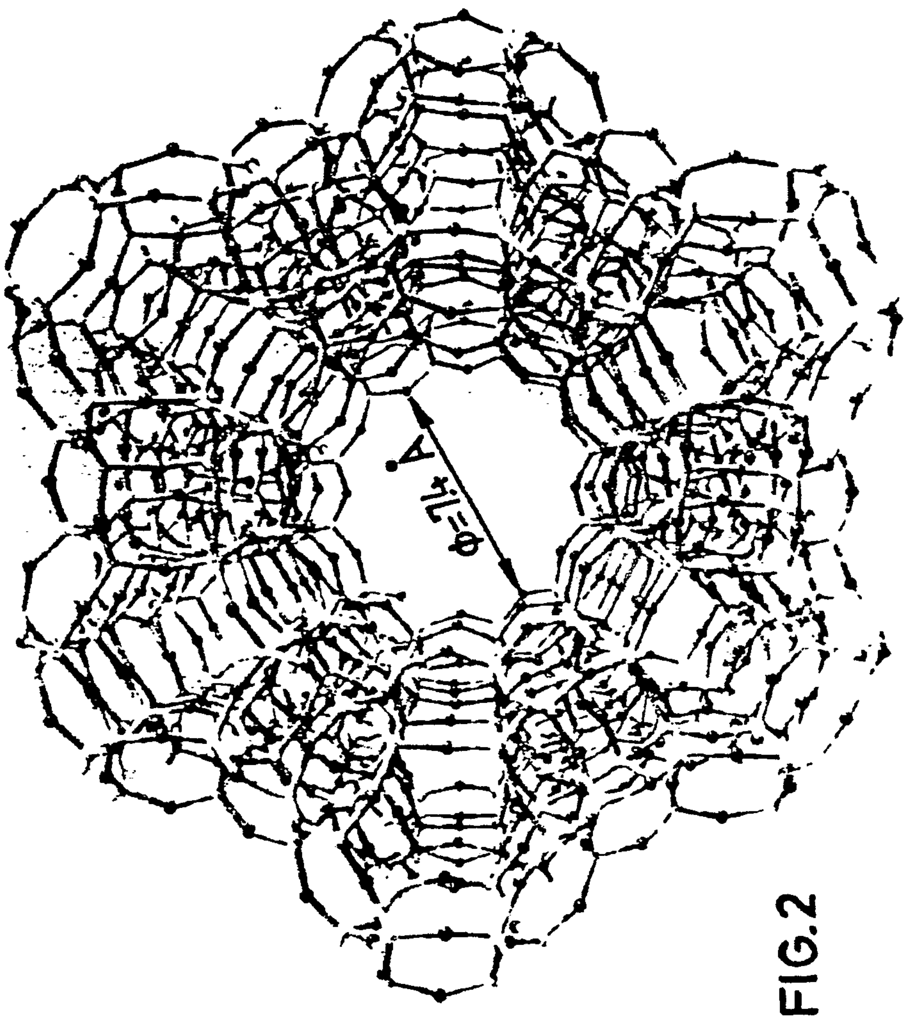


FIG.2